# EUROPÄISCHE PATENTANMELDUNG

(11) **EP 0 612 956 A1**
(43) Veröffentlichungstag der Anmeldung: **31.08.1994**
(21) Anmeldenummer: 94102302.0
(22) Anmeldetag: 16.02.1994
(51) Int. Cl.: F21V 8/00

(54) **Vorrichtung zur Bündelung der Strahlung einer Strahlungsquelle**

(30) Priorität: 20.02.1993 DE 4305270
(71) Anmelder: Bähren, Heinz, D-42799 Leichlingen (DE)
(72) Erfinder: Kirsten, Martin, Dr., D-51399 Burscheid (DE)
(74) Vertreter: Paul, Dieter-Alfred, Dipl.-Ing.

(57) **Zusammenfassung**

Eine Vorrichtung zur Bündelung der Strahlung einer Strahlungsquelle weist ein Reflektorgehäuse (1, 19) auf, das aus einem als Teil eines Ellipsoids geformten Ellipsoidreflektor (2, 20) mit einem primären und einem sekundären Brennpunkt sowie einem als Kugelkalotte geformten Kugelreflektor (3, 21) derart zusammengesetzt ist, daß deren konkave Seiten einander zugewandt sind, wobei der Ellipsoidreflektor (2, 20) durch eine Kante (5, 22) zum Kugelreflektor (3) hin begrenzt ist und wobei ferner in das Reflektorgehäuse (1, 19) im Bereich des primären Brennpunktes (6, 25) eine Strahlungsquelle (10, 28) eingesetzt ist und der Kugelreflektor (3, 21) eine Öffnung (12, 30) in der Achse (4, 24) des Ellipsoidreflektors (2, 20) aufweist, von dem zumindest ein Strahlungsleiter (13, 31) ausgeht. Erfindungsgemäß ist die Kante (5, 22) derart zum primären Brennpunkt (6, 25) zurückversetzt, daß ein von der Strahlungsquelle (10, 28) oder deren Abbild (11, 29) durch den Kugelreflektor (3, 21) ausgehender Strahl so von der Kante (5, 22) reflektiert wird, daß der reflektierte Strahl mit einem Winkel gegen die Achse (4, 24) in den Strahlungsleiter (3, 31) einfällt, der gleich dem oder kleiner als der Grenzwinkel für die Totalreflexion im Strahlungsleiter (13, 31) ist.

## Beschreibung

Die Erfindung bezieht sich auf eine Vorrichtung zur Bündelung der Strahlung einer Strahlungsquelle gemäß den Oberbegriffen der Ansprüche (1) und (5).

Optische Systeme zur Konzentration und Bündelung von Strahlung sind insbesondere für Lichtstrahlung bekannt. Sie dienen zum Ausleuchten eines bestimmten Zielbereiches mit hoher Strahlungsintensität und werden zum Beispiel eingesetzt, um Strahlung in einem Strahlungsleiter einzukoppeln.

Bei der in der DE 38 0̸4 732 A1 beschriebenen Vorrichtung befindet sich die Strahlungsquelle am primären Brennpunkt eines Ellipsoidreflektors, während der Strahlungsleiter, in den die gebündelte Strahlung eingekoppelt wird, am sekundären Brennpunkt angeordnet ist. Der zwischen dem Strahlungsleiter und dem Ende des Ellipsoidreflektors ausgestrahlte Strahlungsanteil wird von dieser Vorrichtung nicht erfaßt und geht für die Strahlungsbündelung verloren.

In der DE 38 0̸4 732 A1 ist eine gattungsgemäße Vorrichtung offenbart, bei der ein Reflektorgehäuse aus einem Ellipsoidreflektor und einem Kugelreflektor besteht. Die beiden Teile sind miteinander verbunden und bilden einen geschlossenen Raum. Der Kugelreflektor hat eine mittige Öffnung und ist so angeordnet, daß seine Öffnung mit der Achse des Ellipsoidreflektors koaxial ist, wobei der Mittelpunkt des Kugelreflektors im primären Brennpunkt des Ellipsoidreflektors liegt. Die Strahlungsquelle ist im primären Brennpunkt des Ellipsoidreflektors angeordnet. Die direkt vom Ellipsoidreflektor reflektierte Strahlung kann das Reflektorgehäuse durch die Öffnung im Kugelreflektor verlassen. Die restliche Strahlung mit Ausnahme der direkt in die Öffnung im Kugelreflektor abgegebenen Strahlung wird vom Kugelreflektor zur Strahlungsquelle zurückreflektiert.

Von Nachteil ist bei dieser Vorrichtung, daß ein Teil der reflektierenden Strahlung unter einem so großen Winkel auf die Eintrittsfläche des Strahlungsleiters auftrifft, daß im Strahlungsleiter keine Totalreflexion mehr stattfinden kann und dadurch dieser Strahlungsanteil ebenfalls verloren geht. Außerdem legt der vom Strahlungsleiter durch den Totalreflexionsgrenzwinkel und mit geringfügig kleineren Winkeln reflektierte Anteil der Gesamtstrahlung einen sehr langen Weg im Strahlungsleiter zurück, so daß sich die an sich geringe Absorption des Strahlungsleitermaterials verstärkt bemerkbar macht.

Der Erfindung liegt die Aufgabe zugrunde, eine Vorrichtung zur Bündelung der Strahlung einer Strahlungsquelle bereitzustellen, die bei der Einkoppelung der gebündelten Strahlung in einen Strahlungsleiter einen hohen Ausnutzungsgrad der Strahlung der Strahlungsquelle bewirkt.

Erfindungsgemäß wird diese Aufgabe dadurch gelöst, daß die Kante des Ellipsoidreflektors derart zum primären Brennpunkt zurückversetzt ist, daß ein von der Strahlungsquelle oder deren Abbild ausgehender Strahl so von der Kante reflektiert wird, daß der reflektierte Strahl mit einem Winkel gegen die Achse des Ellipsoidreflektors in den Strahlungsleiter einfällt, der gleich oder kleiner ist, als der Grenzwinkel für Totalreflexion im Strahlungsleiter.

Bei einer derartigen Gestaltung des Ellipsoidreflektors ist gewährleistet, daß der gesamte in den Strahlungsleiter eintretende Strahlungsfluß im Strahlungsleiter durch Totalreflexion weitergeleitet wird. Zudem kann der Eintrittswinkel der gebündelten Strahlung noch weiter verkleinert werden, um den Weg der Strahlung im Strahlungsleiter möglichst kurzzuhalten und dadurch Absorptionsverluste im Strahlungsleitermaterial zu minimieren.

In Ausbildung der Erfindung ist vorgesehen, daß der Mittelpunkt des Kugelreflektors sich im Bereich des primären Brennpunktes des Ellipsoidreflektors befindet. Hierdurch ergibt sich eine besonders einfache Gestaltung des Reflektorgehäuses und dementsprechend auch eine kostengünstige Herstellung.

In weiterer Ausgestaltung der Erfindung ist vorgesehen, daß der Mittelpunkt des Kugelreflektors sich im Bereich des primären Brennpunktes des Ellipsoidreflektors befindet. In diesem Fall ergibt sich eine besonders gleichmäßige Ausleuchtung der Öffnung im Kugelreflektor.

Gemäß der Erfindung ist ferner vorgesehen, daß der Radius des Kugelreflektors gleich dem Abstand der den Ellipsoidreflektor begrenzenden Kante vom primären Brennpunkt ist. Bei dieser Gestaltung entsteht ein geschlossenes Reflektorgehäuse, das vorteilhaft ist, wenn die Vorrichtung in aggressiven Atmosphären betrieben werden soll. Zudem können bei dieser Ausführungsform Kugelreflektor und Ellipsoidreflektor, wenn sie einmal zueinander justiert sind, über die ganze Länge der einander zugewandten Kanten miteinander verbunden werden, wodurch sich eine besonders stabile Gestaltung des Reflektorgehäuses ergibt.

Eine besonders gute Strahlungsausbeute wird erreicht, wenn die Öffnung im Kugelreflektor kreisförmig ist und von den Verbindungsgeraden der Punkte auf den Ellipsoidreflektor begrenzenden Kante mit dem sekundären Brennpunkt des Ellipsoidreflektors begrenzt wird. In diesem Fall ist nämlich gewährleistet, daß die Öffnung im Kugelreflektor gerade so groß ist, daß die gesamte, vom Ellipsoidreflektor in seinem sekundären Brennpunkt reflektierte Strahlung aus dem Reflektorgehäuse austritt.

Der Erfindungsgedanke läßt sich auch durch eine Vorrichtung verwirklichen, in der statt des Kugelreflektors ein zylindrischer vorderer konkaver Reflektor und statt des Ellipsoidreflektors ein hinterer konkaver Reflektor mit teilelipsoidem Querschnitt vorgesehen wird. In diesem Fall wird der hintere konkave Reflektor durch zwei Kanten begrenzt, die derart zu der primären Brennpunktachse des hinteren konkaven Reflektors zurückversetzt sind, daß ein von der Strahlungsquelle oder deren Abbild ausgehender Strahl so von einer der Kanten reflektiert wird, daß der reflektierte Strahl mit einem Winkel in den Strahlungsleiter einfällt, der gleich dem oder kleiner als der Grenzwinkel für Totalreflexion im Strahlungsleiter ist.

Ein Vorteil der erfindungsgemäßen Anordnung mit einem zylindrischen vorderen konkaven Reflektor und einem hinteren konkaven Reflektor mit teilellipsoidem Querschnitt ist, daß in eine derartige Anordnung statt einer punktförmigen Strahlungsquelle eine linienförmige Strahlungsquelle oder mehrere, in einer Reihe nebeneinander angeordnete punktförmige Strahlungsquellen eingesetzt werden können. Weiterhin besteht die Möglichkeit, die aus der Öffnung im Reflektorgehäuse austretende Strahlung gleichzeitig in mehrere, nebeneinander angeordnete Strahlungsleiter einzuspeisen.

In Ausbildung der Erfindung ist vorgesehen, daß die Zylinderachse des vorderen konkaven Reflektors sich im Bereich der primären Brennpunktachse des hinteren konkaven Reflektors befindet. Bei dieser Ausführungsform ergibt sich eine besonders gleichmäßige Bündelung der Strahlung in der Öffnung des Reflektorgehäuses.

In weiterer Ausgestaltung der Erfindung ist vorgesehen, daß der Radius des vorderen konkaven Reflektors gleich dem Abstand der den hinteren Reflektor begrenzenden Kanten von der primären Brennpunktachse ist. In dieser Ausgestaltung können der vordere und der hintere konkave Reflektor nach der gegenseitigen Justierung entlang der vollen Länge die aneinanderstoßenden Kanten verbunden werden, wodurch sich eine besonders stabile Gestaltung des Reflektorgehäuses ergibt.

Schließlich ist bei der erfindungsgemäßen Anordnung vorgesehen, daß die Öffnung im vorderen konkaven Reflektor schlitzförmig ist und von den Verbindungsgeraden der Punkte auf der den hinteren konkaven Reflektor begrenzenden Kante mit der sekundären Brennpunktachse des hinteren konkaven Reflektors begrenzt wird. Mit dieser Ausgestaltung der Erfindung ist gewährleistet, daß die Öffnung im vorderen konkaven Reflektor genau so groß ist, daß die gesamte vom hinteren konkaven Reflektor auf seine sekundäre Brennpunktachse gebündelte Strahlung das Reflektorgehäuse durch die Öffnung im vorderen konkaven Reflektor verlassen kann.

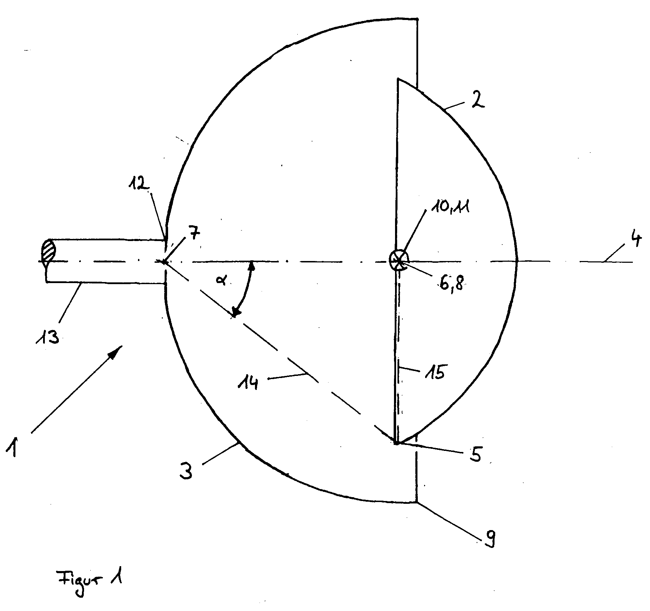

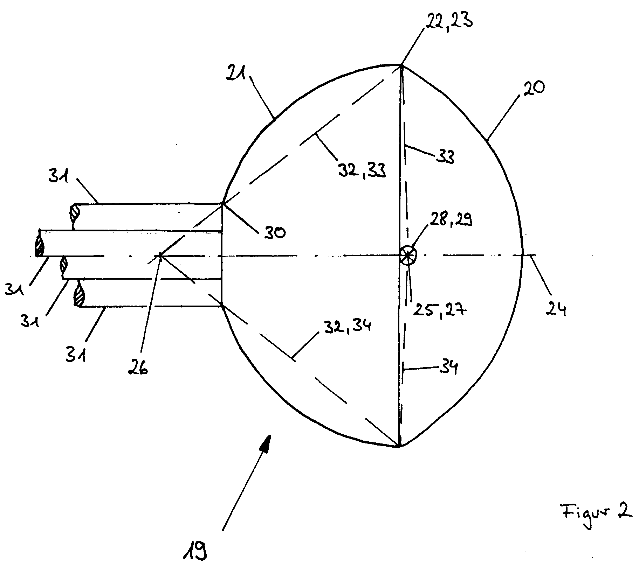

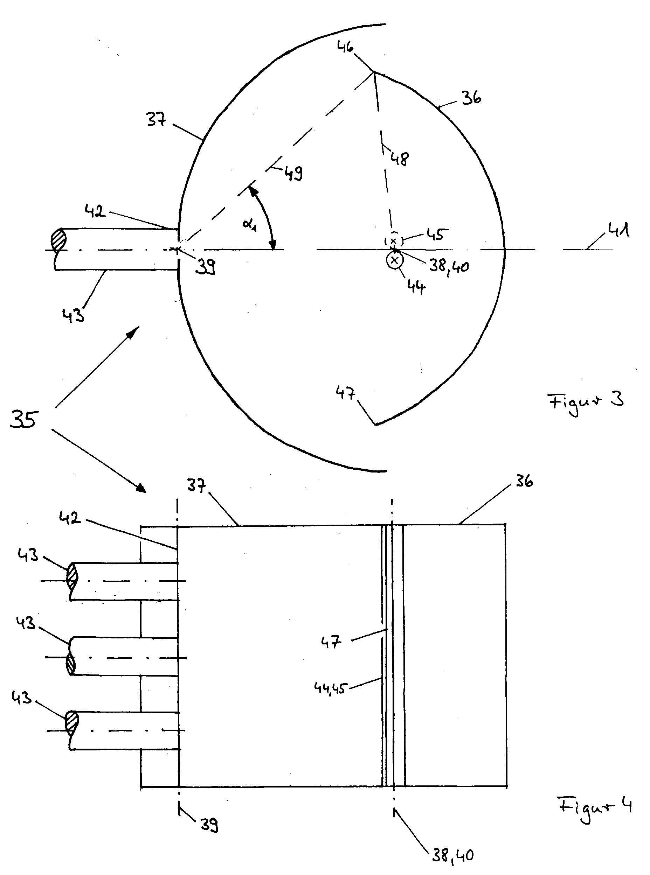

In der Zeichnung ist die Erfindung an Hand von Ausbildungsbeispielen näher veranschaulicht. Es zeigen:
- Figur (1): einen Mittellängsschnitt durch die erfindungsgemäße Vorrichtung zur Bündelung und Begrenzung des Austrittswinkels der Strahlung einer Strahlungsquelle;
- Figur (2): einen Mittellängsschnitt einer weiteren erfindungsgemäßen Vorrichtung;
- Figur (3): eine Seitenansicht einer weiteren erfindungsgemäßen Vorrichtung;
- Figur (4): eine Draufsicht auf die horizontal geschnittene Vorrichtung gemäß Figur (3).

Figur (1) zeigt einen Mittellängsschnitt entlang der optischen Achse eines Reflektorgehäuses (1). Das Reflektorgehäuse (1) ist aus einem Ellipsoidreflektor (2) und einem Kugelreflektor (3) derart zusammengesetzt, daß deren konkave Seiten einander zugewandt sind.

Der Ellipsoidreflektor (2) ist als Teil eines Rotationsellipsoides ausgebildet, das von einer zu seiner Achse (4) senkrechten Ebene geschnitten wird. Diese Ebene schneidet das Rotationsellipsoid so, daß die entstehende kreisförmige Begrenzungskante (5) den Ellipsoidreflektor (2) zum Kugelreflektor (3) hin begrenzt. Der Ellipsoidreflektor (2) weist weiterhin einen primären Brennpunkt (6) und einen sekundären Brennpunkt (7) auf, durch die die Achse (4) des Ellipsoidreflektors (2) verläuft, die auch gleichzeitig die optische Achse der Vorrichtung darstellt.

Der Kugelreflektor (3) ist als Teil einer Kugelkalotte geformt und so angeordnet, daß sein Mittelpunkt (8) mit dem primären Brennpunkt (9) des Ellipsoidreflektors (2) zusammenfällt. Der Kugelreflektor (3) entsteht durch den Schnitt der ihm zugrunde liegenden Kugel mit einer zur Achse (4) des Ellipsoidreflektors (2) senkrechten Ebene, wodurch die kreisförmige Begrenzungskante (9) des Kugelreflektors (3) festgelegt wird.

Im Reflektorgehäuse (1) befindet sich weiterhin eine Strahlungsquelle (10̸), die im primären Brennpunkt (6) des Ellipsoidreflektors (2) angeordnet ist und bei dieser Anordnung mit ihrem Abbild (11) durch den Kugelreflektor (3) zusammenfällt. Der Kugelreflektor (3) hat eine kreisrunde Öffnung (12), in die ein Strahlungsleiter (13) eingesteckt ist. Bei dieser besonderen Anordnung befindet sich der sekundäre Brennpunkt (7) des Ellipsoidreflektors (2) genau in der Öffnung (12). Die im Reflektorgehäuse (1) gebündelte Strahlung verläßt das Reflektorgehäuse (1) durch diese Öffnung (12). Der Austrittswinkel eines durch die Öffnung (12) aus dem Gehäuse (1) austretenden Strahls (14) ist gleich dessen Eintrittswinkel in den Strahlungsleiter (13).

Aus den beiden eingezeichneten Strahlengängen (14) und (15) wird die Bedeutung der Lage der Begrenzungskante (5) für den maximalen Austrittswinkel der im Reflektorgehäuse (1) gebündelten Strahlung deutlich. Die Begrenzungskante (5) ist nämlich derart zum primären Brennpunkt (6) zurückverlegt, daß der von der Strahlungsquelle (10̸) ausgehende und auf die Begrenzungskante (5) auftreffende Lichtstrahl (15) so reflektiert wird, daß der reflektierte Strahl (14) mit einem Winkel von ca. 37° bezüglich der Achse (4) des Ellipsoidreflektors (2) in die Öffnung (12) eintritt. Unter der Voraussetzung, daß der Grenzwinkel für Totalreflexion im Strahlungsleiter (13) gleich 38° ist, wird bei dieser besonderen Anordnung der gesamte vom Reflektorgehäuse (1) gebündelte Strahlungsfluß vollständig durch Totalreflexion im Strahlungsleiter (16) weitergeleitet.

Figur (2) zeigt einen Schnitt entlang der optischen Achse eines Reflektorgehäuses (19). Das Reflektorgehäuse (19) ist aus einem Ellipsoidreflektor (20̸) und einem Kugelreflektor (21) derart zusammengesetzt, daß deren konkave Seiten einander zugewandt sind. Der Ellipsoidreflektor (20̸) und der Kugelreflektor (21) sind an ihren aneinanderstoßenden Begrenzungskanten (22) bzw. (23) miteinander verbunden und bilden so einen geschlossenen Raum.

Der Ellipsoidreflektor ist als Teil eines Rotationsellipsoides ausgebildet, das von einer zu seiner Achse (24) senkrechten Ebene geschnitten wird, so daß die entstandene kreisförmige Begrenzungskante (22) den Ellipsoidreflektor (20̸) zum Kugelreflektor (21) hin begrenzt. Der Ellipsoidreflektor (20̸) weist einen primären Brennpunkt (25) und einen sekundären Brennpunkt (26) auf, durch die die Achse (24) des Ellipsoidreflektors (20̸) verläuft, die auch gleichzeitig die optische Achse der gezeigten Anordnung ist.

Die Verbindungsgerade zwischen einem beliebigen Punkt der Begrenzungskante (22) und dem sekundären Brennpunkt (26) schließt mit der Achse (24) des Ellipsoidreflektors einen Winkel von ca. 37° ein.

Der Kugelreflektor (21) ist als Kugelkalotte geformt und so angeordnet, daß sein Mittelpunkt (27) mit dem primären Brennpunkt (25) des Ellipsoidreflektors (20̸) zusammenfällt. Der Radius des Kugelreflektors ist gleich dem Abstand der Begrenzungskante (22) zum primären Brennpunkt (25).

Im Reflektorgehäuse (19) befindet sich eine Strahlungsquelle (28), die im primären Brennpunkt (25) des Ellipsoidreflektors (20̸) angeordnet ist. Bei dieser besonderen Anordnung fallen die Strahlungsquelle (28) und ihr Abbild (29) durch den Kugelreflektor (21) zusammen.

Im Kugelreflektor (21) befindet sich eine kreisrunde Öffnung (30̸), in die eine Anzahl Strahlungsleiter (31) eingesteckt sind. Die im Reflektorgehäuse (19) gebündelte Strahlung verläßt das Reflektorgehäuse (19) durch diese Öffnung (30̸).

Die Öffnung (30̸) im Kugelreflektor (21) ist weiterhin kreisförmig und wird von den Verbindungsgeraden (32) der Punkte auf der Begrenzungskante (22) mit dem sekundären Brennpunkt (26) des Ellipsoidreflektors (20̸) begrenzt. Die Strahlengänge (33) und (34) beschreiben beispielhaft den Weg der Strahlung, die aus dem Bereich des primären Brennpunktes (25) auf die Begrenzungskante (22) auftrifft und in Richtung des sekundären Brennpunktes (26) und damit in die Öffnung (30̸) reflektiert wird. Diese beiden Strahlengänge (33) bzw. (34) stehen gleichzeitig auch stellvertretend für die Lichtstrahlen, die das Reflektorgehäuse (19) unter dem maximalen Austrittswinkel verlassen, der in der gezeigten Anordnung dem Grenzwinkel für Totalreflexion in den Strahlungsleitern (31) entspricht. Aus diesem Grund kann der gesamte, gebündelt aus dem Reflektorgehäuse (19) austretende Strahlungsfluß von den Strahlungsleitern (31) weitergeleitet werden.

Bei diesem Ausführungsbeispiel wird die Bedeutung der Größe der Öffnung (30̸) im Kugelreflektor (21) auf die Strahlungsausbeute der erfindungsgemäßen Vorrichtung zur Bündelung der Strahlung der Strahlungsquelle (28) deutlich. Wenn die Öffnung (30̸) nämlich im gezeigten Ausführungsbeispiel kleiner geformt wird, als die sich aus der Schnittbedingung der Geraden (32) mit dem Kugelreflektor (21) ergebende Öffnung (30̸), kann ein Teil der in Richtung des sekundären Brennpunktes (26) reflektierten Strahlung nicht aus dem Reflektorgehäuse (19) austreten.

Die Figuren (3) und (4) schließlich zeigen eine Vorrichtung zur Bündelung und Begrenzung des Austrittswinkels der Strahlung einer Strahlungsquelle, die insbesondere für linienförmige Strahlungsquellen verwendet werden kann. Dessen Reflektorgehäuse (35) ist aus einem hinteren konkaven Ellipsoidreflektor (36) als gebogenes Gebilde nach Art einer Ellipsoidrinne mit teilellipsoidem Querschnitt und aus einem vorderen konkaven Zylinderreflektor (37), der als Teil eines Zylinders geformt ist, so zusammengesetzt, daß deren konkave Seiten einander zugewandt sind.

Der Ellipsoidreflektor (36) weist eine primäre Brennpunktachse (38) und eine sekundäre Brennpunktachse (39) auf. Die Zylinderachse (40̸) des Zylinderreflektors (37) ist parallel zu den Brennpunktachsen (38, 39) und fällt im gezeigten Ausführungsbeispiel mit der primären Brennpunktachse (38) des Ellipsoidreflektors (35) zusammen. Die primäre Brennpunktachse (38) und die sekundäre Brennpunktachse (39) liegen in einer Ebene (41).

Der Zylinderreflektor (37) weist an der Stelle, an der er von der Ebene (41) durchdrungen wird, eine Öffnung (42) auf, die sich, wie man am besten in Figur (4) sieht, über die ganze Breite des Zylinderreflektors (37) erstreckt. Bei dieser besonderen Anordnung befindet sich die sekundäre Brennpunktachse (39) genau in der Öffnung (42) des Zylinderreflektors (37).

Die im Reflektorgehäuse (35) gebündelte Strahlung verläßt das Reflektorgehäuse (35) durch diese Öffnung (42). Weiterhin ist die Öffnung (42) derart ausgestaltet, daß die Enden von mehreren Strahlungsleitern (43) nebeneinander entlang der sekundären Brennpunktachse (39) eingesteckt werden können.

Im gezeigten Ausführungsbeispiel ist eine linienförmige Strahlungsquelle (44) vorgesehen, die sich, wie man am besten in Figur (4) sieht, über die gesamte Breite des Reflektorgehäuses (35) erstreckt. Die Strahlungsquelle (44) ist, wie man am besten in Figur (2) sieht, im Bereich der primären Brennpunktachse (38) querversetzt zur Ebene (41) durch die Brennpunktachsen (38) und (39) und parallel zu den Brennpunktachsen (38, 39) angebracht.

Dadurch, daß die Strahlungsquelle (44) seitlich versetzt von der Zylinderachse (40̸) des Zylinderreflektors (37) angeordnet ist, wird die von der Strahlungsquelle (38) auf dem Zylinderreflektor (37) auftreffende Strahlung seitlich an der Strahlungsquelle (44) vorbei zurückreflektiert. Dieser Sachverhalt wird durch das eingezeichnete Abbild (45) der Strahlungsquelle (44) zum Ausdruck gebracht.

Die Seitenwände der Vorrichtung können, wie man in den Figuren (3) und (4) sieht, offengelassen werden, was die Kühlung des gezeigten Ausführungsbeispiels verbessert. Ebenso können aber auch die Seitenwände des Reflektorgehäuses (35) verkleidet werden, entweder durch gerade Wände oder durch je einen Teil eines Rotationsellipsoides und eines Kugelreflektors mit zum Zylinderreflektor (42) und Ellipsoidreflektor (36) identischen analogen Grundmaßen. Bei der geschlossenen Ausführung wird die Strahlungsausbeute insbesondere bei kurzen Reflektorgehäusen mit kurzen linienförmigen Lichtquellen erheblich verbessert.

Im gezeigten Ausführungsbeispiel wird der Ellipsoidreflektor (36) von einer zur Ebene (41) durch die beiden Brennpunktachsen (38) und (39) senkrechten und zu den beiden Brennpunktachsen (38) und (39) parallelen Ebene geschnitten, so daß die beiden entstehenden Begrenzungskanten (46) und (47) den Ellipsoidreflektor (36) zum Zylinderreflektor (37) hin begrenzen. Die Verbindungsgerade zwischen einem beliebigen Punkt der Begrenzungskanten (46) bzw. (47) und dem korrespondierenden Punkt auf der sekundären Brennpunktachse (39) schließen mit der Ebene (41) durch die primäre und sekundäre Brennpunktachse (38) bzw. (39) einen Winkel von ca. 42° ein.

Der Austrittswinkel α₁ eines Lichtstrahls (48) durch die Öffnung (42) des Reflektorgehäuses (35) ist definiert als der Winkel, den der austretende Lichtstrahl (49) mit der Ebene (41) durch die Brennpunktachsen (38) und (39) des hinteren konkaven Reflektors (36) einschließt und ist gleich dem Eintrittswinkel in den Strahlungsleiter (43).

Stellvertretend für den Anteil des Gesamtstrahlungsflusses, der das Reflektorgehäuse (35) gebündelt verläßt, ist der Strahlengang (48, 49) in Figur (3) eingezeichnet, der aus dem Bereich der primären Brennpunktachse (38) kommend auf der Begrenzungskante (46) des Ellipsoidreflektors (36) auftrifft und in den Bereich der sekundären Brennpunktachse (39) reflektiert wird. Der Lichtstrahl (48) verläßt das Reflektorgehäuse (35) unter einem Winkel von ca. 42°. Dieser Winkel stimmt mit dem vorher durch die Lage der Begrenzungskante (46) festgelegten maximalen Austrittswinkel α₁ der Vorrichtung überein und ist gleich dem Grenzwinkel für Totalreflexion im Strahlungsleiter (43), so daß der gesamte vom Reflektorgehäuse (35) gebündelte Strahlungsfluß durch den Strahlungsleiter (43) weitergeleitet wird.

## Patentansprüche

1. Vorrichtung zur Bündelung der Strahlung einer Strahlungsquelle, insbesondere zur Einkoppelung in einen Strahlungsleiter, mit einem Reflektorgehäuse (1, 19), das aus einem als Teil eines Ellipsoids geformten Ellipsoidreflektor (2, 20̸) mit einem primären und einem sekundären Brennpunkt (6, 25) sowie einem als Kugelkalotte geformten Kugelreflektor (3, 21) derart zusammengesetzt ist, daß deren konkave Seiten einander zugewandt sind, wobei der Ellipsoidreflektor (2, 20̸) durch eine Kante (5, 22) zum Kugelreflektor (3) hin begrenzt ist und wobei ferner in das Reflektorgehäuse (1, 19) im Bereich des primären Brennpunktes (6, 25) des Ellipsoidreflektors (2, 20̸) eine Strahlungsquelle (10̸, 28) eingesetzt ist und der Kugelreflektor (3, 21) eine Öffnung (12, 30̸) in der Achse (4, 24) des Ellipsoidreflektors (2, 20̸) für den Austritt der gebündelten Strahlung aufweist, von dem zumindest ein Strahlungsleiter (13, 31) ausgeht,
dadurch gekennzeichnet, daß die Kante (5, 22) derart zum primären Brennpunkt (6, 25) zurückversetzt ist, daß ein von der Strahlungsquelle (10̸, 28) oder deren Abbild (11, 29) durch den Kugelreflektor (3, 21) ausgehender Strahl so von der Kante (5, 22) reflektiert wird, daß der reflektierte Strahl mit einem Winkel gegen die Achse (4, 24) in den Strahlungsleiter (13, 31) einfällt, der gleich dem oder kleiner als der Grenzwinkel für Totalreflexion im Strahlungsleiter (13, 31) ist.

2. Vorrichtung nach Anspruch (1),
dadurch gekennzeichnet, daß der Mittelpunkt (8, 27) des Kugelreflektors (3, 21) sich im Bereich des primären Brennpunktes (6, 25) des Ellipsoidreflektors (2, 20̸) befindet.

3. Vorrichtung nach einem der vorhergehenden Ansprüche, dadurch gekennzeichnet, daß der Radius des Kugelreflektors (21) gleich dem Abstand der den Ellipsoidreflektor (20̸) begrenzenden Kante (22) von seinem primären Brennpunkt (25) ist.

4. Vorrichtung nach einem der vorhergehenden Ansprüche, dadurch gekennzeichnet, daß die Öffnung (30̸) im Kugelreflektor (21) kreisförmig ist und von den Verbindungsgeraden (32) der Punkte auf der den Ellipsoidreflektor (20̸) begrenzenden Kante (22) mit dem sekundären Brennpunkt (26) des Ellipsoidreflektors (20̸) begrenzt wird.

5. Vorrichtung zur Bündelung der Strahlung einer Strahlungsquelle, insbesondere zur Einkoppelung in einen Strahlungsleiter, mit einem Reflektorgehäuse (35), das aus einem hinteren konkaven Reflektor (36) und einem vorderen konkaven Reflektor (37) derart zusammengesetzt ist, daß deren konkave Seiten einander zugewandt sind, wobei in das Reflektorgehäuse (35) eine Strahlungsquelle (44) eingesetzt ist und wobei ferner der vordere konkave Reflektor (37) eine Öffnung (42) für den Austritt der gebündelten Strahlung aufweist, von der zumindest ein Strahlungsleiter (43) ausgeht,
dadurch gekennzeichnet, daß der hintere konkave Reflektor (36) als gebogenes Gebilde nach Art einer Ellipsoidrinne mit teilweise ellipsoidem Querschnitt geformt ist und eine primäre und eine sekundäre Brennpunktachse (38) und (39) aufweist, daß der vordere konkave Reflektor (37) als Teil eines Zylinders geformt ist, daß die Strahlungsquelle (44) im Bereich der primären Brennpunktachse (38) des hinteren konkaven Reflektors (36) eingesetzt ist, und daß schließlich der hintere konkave Reflektor (36) durch zwei Kanten (46, 47) zum vorderen konkaven Reflektor (37) hin begrenzt ist, wobei die Kanten (46, 47) derart zur primären Brennpunktachse (38) zurückversetzt sind, daß ein von der Strahlungsquelle (44) oder deren Abbild (45) durch den vorderen konkaven Reflektor (37) ausgehender Strahl (48) so von einer der Kanten (46, 47) reflektiert wird, daß der reflektierte Strahl (49) mit einem Winkel gegen die Ebene (41) durch die beiden Brennpunktsachsen (38, 39) einfällt, der kleiner als der oder gleichs dem Grenzwinkel für Totalreflexion im Strahlungsleiter (43) ist.

6. Vorrichtung nach Anspruch (5),
dadurch gekennzeichnet, daß die Zylinderachse (40̸) des vorderen konkaven Reflektors (37) sich im Bereich der primären Brennpunktachse (38) des hinteren konkaven Reflektors befindet.

7. Vorrichtung nach Anspruch (5) oder (6),
dadurch gekennzeichnet, daß der Radius des vorderen konkaven Reflektors (37) gleich dem Abstand der den hinteren konkaven Reflektor (36) begrenzenden Kanten (46) bzw. (47) von seiner primären Brennpunktachse (38) ist.

8. Vorrichtung nach einem der Ansprüche (5) bis (7),
dadurch gekennzeichnet, daß die Öffnung im vorderen konkaven Reflektor schlitzförmig ist und von den Verbindungsgeraden der Punkte auf der den hinteren konkaven Reflektor begrenzenden Kante mit der sekundären Brennpunktachse des hinteren konkaven Reflektors begrenzt wird.
